# EUROPÄISCHE PATENTSCHRIFT

(11) **EP 2 005 038 B1**
(45) Veröffentlichungstag und Bekanntmachung des Hinweises auf die Patenterteilung: **11.06.2014**
(21) Anmeldenummer: 07727608.7
(22) Anmeldetag: 02.04.2007
(51) Int. Cl.: F16H 61/28, F16H 61/30, F15B 11/00

(54) **VERFAHREN ZUR STEUERUNG EINES FLUIDBETÄTIGTEN STEUERSYSTEMS**
METHOD FOR CONTROLLING A FLUID-ACTUATED CONTROL SYSTEM
PROCEDE POUR COMMANDER UN SYSTEME DE COMMANDE ACTIONNE PAR UN FLUIDE

(30) Priorität: 07.04.2006 DE 102006016414
(43) Veröffentlichungstag der Anmeldung: 24.12.2008
(73) Patentinhaber: ZF Friedrichshafen AG, 88038 Friedrichshafen (DE)
(72) Erfinder: INGENBLEEK, Robert, 88079 Kressbronn (DE); ULBRICHT, Markus, 88069 Tettnang (DE); STEINBORN, Mario, 88046 Friedrichshafen (DE); BRENTEL, Armin, 88045 Friedrichshafen (DE)
(86) Internationale Anmeldenummer: PCT/EP2007/053136
(87) Internationale Veröffentlichungsnummer: WO 2007/115957

(56) Entgegenhaltungen:
- EP-A- 1 055 847
- EP-A- 1 232 901
- EP-A- 1 344 965
- EP-A1- 0 479 349
- EP-A1- 0 887 220
- FR-A1- 2 849 129

## Beschreibung

Die Erfindung betrifft ein Verfahren zur Steuerung eines fluidbetätigten Steuersystems gemäß dem Oberbegriff des Patentanspruchs 1.

An fluidbetätigte Steuersysteme, nachfolgend auch kurz als Fluidmittelsysteme bezeichnet, und besonders an solche Steuersysteme für automatische oder automatisierte Getriebe in Kraftfahrzeugen, werden heutzutage hohe Ansprüche gestellt. Neben besonderen Anforderungen in Hinblick auf geringes Gewicht bei gleichzeitig hoher Zuverlässigkeit, Langlebigkeit und Wartungsarmut sollen gerade bei Personenkraftwagen durch die Vorrichtungsbestandleile des Fluidmittelsystems bedingte Erschütterungen und Geräusche möglichst vermieden oder zumindest so weit wie möglich gedämpft werden. Zudem bestehen besondere Anforderungen an die Betätigungsgeschwindigkeit von anzusteuernden Stellgliedern, da beispielsweise eine durch einen Gangwechsel bedingte Zugkraftunterbrechung möglichst kurz andauern soll. Gleichzeitig soll das Fluidmittelsystem möglichst preisgünstig herzustellen und zu montieren sein.

EP479349 offenbart ein Verfahren mit den Merkmalen des Oberbegriffs des Anspruchs 1.

So ist es bisher bei fluidbetätigten Getrieben üblich, im Anschluss an eine Steuerungsaktion, also an eine Veränderung der Stellung zumindest eines fluidbetätigten Stellgliedes, den Druck auf das oder die druckbeaufschlagten Stellglieder abzuschalten oder zumindest auf einen geringeren, für die Aufrechterhaltung der gewünschten Lage der druckbeaufschlagten Elemente ausreichenden Druck abzusenken. Dies ermöglicht eine Entlastung der Druckmittelleitungen und sonstiger druckbeaufschlagter Teile des Druckmittelsystems und der Stellglieder, und ermöglicht so eine Verringerung der Belastungen und dementsprechend ein schwächere und leichtere Auslegung und/oder eine höhere Standzeit des gesamten Fluidmittelsystems. Daneben bietet eine nur bei tatsächlich anstehenden Schaltaktionen erfolgende Beaufschlagung des Systems mit einem erhöhten Druck aufgrund der stets vorhandenen Leckströme Vorteile in Hinblick auf die zur Erzeugung des Druckes benötigte Energie sowie in Hinblick auf einen Fluidverlust bei einer Leckage in diesen Systemteilen.

Um ein Zurückprellen eines druckbeaufschlagten, beweglichen Elementes eines Stellgliedes z.B. von einem festen Anschlag zu verhindern oder zumindest zu verringern und das druckbeaufschlagte bewegliche Element zuverlässig in einer gewünschten Sollstellung zur Ruhe zu bringen, wird dieser bei Erreichen einer Sollposition, wie beispielsweise eines mechanischen Anschlags, üblicherweise noch für eine kurze Weile, der sogenannten Nachschaltzeit, mit Druck beaufschlagt.

Bei einem Fluidmittelsystem mit mehreren Stellgliedern wurde es dabei zum Teil als vorteilhaft angesehen, bei einem durchzuführenden Schaltvorgang oder einer sonstigen gewünschten Bewegung zumindest eines druckmittelbetätigten Stellgliedes durch z.B. ein Hauptventil für eine standardisierte, aus einer Stellzeit, und einer Nachschaltzeit bestehenden Zeit einen standardisierten Druck auf das gesamte System zu geben, wodurch das oder die anzusteuernden Stellglieder bzw. deren bewegliche Elemente in die gewünschte Betätigungsposition gebracht werden, während die übrigen Stellglieder bzw. deren bewegliche Elemente durch die Druckbeaufschlagung in ihrer Position festgehalten werden.

Oft sind die Stellglieder jedoch auch über in deren Nähe verbaute Steuerventile an eine im Betrieb ständig unter einem standardisierten Betriebsdruck stehende Druckmittelzuleitung sowie an eine unter geringerem Druck stehende abgeschlossen Druckmittelableitung bzw. Drucklosleitung angeschlossen, so dass zur Betätigung eines Stellgliedes z.B. durch eine entsprechende Ansteuerung von Ventilen gezielt dieses Stellglied für eine standardisierte Zeit unter den Betriebsdruck gesetzt wird. Bei pneumatischen Systemen kann die Druckmittelableitung dabei oft durch eine einfache Entlüftungsmöglichkeit in die Umwelt ersetzt werden. Auch in diesem Fall ist es üblich und wurde bisher oft als vorteilhaft angesehen, eine zuvor festgelegte Nachschaltzeit vorzusehen.

Die Nachstellzeit ist zur Erfüllung ihrer Funktion in beiden Fällen so zu bemessen, dass sie den ihr zugedachten Zweck der Dämpfung des Anschlagprellens und der Sicherung der gewünschten Lage der druckbeaufschlagten beweglichen Elemente der Stellglieder möglichst für alle Stellglieder des Systems und unter allen Betriebsbedingungen erfüllen kann.

Die vorstehend beschriebene Ansteuerung mit fester Nachschaltzeit ist jedoch mit folgenden Nachteilen behaftet:
Aufgrund der sehr unterschiedlichen, für einen optimierten Betrieb notwendigen oder wünschenswerten Nachschaltzeiten für unterschiedliche Stellglieder und Einbauorte werden oft Kompromisse derart notwendig, dass die Nachschaltzeiten für eines oder einige Stellglieder kürzer oder länger vorgesehen werden müssen, als dies eigentlich erstrebenswert wäre.

Dies hat entweder eine unnötig lange Druckbeaufschlagung derjenigen Systemteile zur Folge, für die eine geringere Nachschaltzeit ausreichend wäre, oder eine zu kurze oder jedenfalls nicht unter allen Betriebsbedingungen optimale bzw. voll ausreichende Nachschaltzeit für diejenigen Systemteile, die eine besonders lange Nachschaltzeit benötigen oder für die diese wünschenswert wäre.

Eine Auslegung des Druckmittelsystems auf eine möglichst ähnliche optimale Nachschaltzeit würde zumeist einen unverhältnismäßigen Aufwand und/oder eine Vernachlässigung von vorrangigen Auslegungszielen, wie eine einfache montagegerechte Leitungsführung und die Verwendung von möglichst einheitlichen Leitungsquerschnitten begründen.

Selbst wenn eine derartige Auslegung auf zumindest annähernd gleiche Nachschaltzeiten ohne Vernachlässigung anderer Auslegungsziele gelänge, kann eine einheitliche Nachschaltzeit jedoch höchstens für einen Standardbetriebsfall oder einen Extrembetriebsfall optimiert werden. Hier besteht das Problem, dass der Extrembetriebsfall zumeist eine erheblich längere oder auch erheblich kürzere Nachschaltzeit als ein Standardbetriebsfall benötigt und deshalb entweder während des überwiegenden Anteils der Betriebszeit eine unnötig lange bzw. unerwünscht kurze Nachschaltzeit eingestellt wird oder in extremen Betriebssituationen die Nachschaltzeit zu kurz bzw. zu lang bemessen ist.

Außerdem können bei einem bisher üblichen System unterschiedliche optimale Nachschaltzeiten für unterschiedliche Betätigungsrichtungen eines Stellgliedes ebenso wenig berücksichtigt werden, wie durch sonstige Parameter bestimmte Unterschiede in der Definition einer optimalen Nachschaltzeit.

So kann beispielsweise eine minimale, zum sicheren und ausreichend genauen Einnehmen einer Sollstellung eines Stellgliedes gerade noch ausreichende Nachschaltzeit im Falle eines Druckabfalls im Fluidmittelsystems oder sonstiger Schwierigkeiten bei der Druckmittelversorgung optimal sein, während die Nachschaltzeiten bei einem vom Fahrer gewünschten komfortoptimierten Schaltverhalten des durch das Fluidmittelsystem gesteuerten Getriebes relativ lang eingestellt werden, um ein mögliches Nachschwingen von beweglichen Teilen eines Stellgliedes weitestgehend zu dämpfen und Druckwellen im System sowie dadurch bedingte Schwingungen zu minimieren.

Bei einem vom Fahrer gewünschten möglichst sportlich ausgelegten Schaltverhalten kann dagegen gegebenenfalls auch eine relativ kurze Nachschaltzeit vorteilhaft sein, um das System möglichst schnell wieder in einen definierten Ausgangszustand zu bringen und einen abermaligen Gangwechsel zu ermöglichen. Dadurch bedingte, geringfügig lautere Schaltgeräusche oder Vibrationen können hierbei im Einzelfall sogar erwünscht sein, und als Zeichen einer kompromisslosen Auslegung auf Leistung bzw. Sportlichkeit dienen.

Vor diesem Hintergrund liegt der Erfindung die Aufgabe zugrunde, ein Steuerungsverfahren für ein Fluidmittelsystem, beispielsweise für ein automatisiertes oder automatisches Kraftfahrzeuggetriebe vorzustellen, welches die vorstehend geschilderten Nachteile nicht aufweist oder zumindest deutlich abmildert. Eine weitere Aufgabe besteht darin, eine Steuerungssystem zur Durchführung eines solchen Verfahrens zu beschreiben.

Die Lösung dieser Aufgabe ergibt sich aus den unabhängigen Patentansprüchen, während vorteilhafte Ausgestattungen und Weiterbildungen der Erfindung den jeweils zugeordneten Unteransprüchen entnehmbar sind.

Der Erfindung liegt die Erkenntnis zugrunde, dass die Dauer einer nach der Betätigung eines Stellgliedes durch ein Fluid optimalen Nachschaltzeit von einer Vielzahl unterschiedlicher Faktoren abhängig ist, und daher eine einheitliche Nachschaltzeit weder für alle Teilsysteme oder Komponenten des Fluidmittelsystems noch für alle Betriebsbedingungen oder sonstigen Randbedingungen angegeben werden kann, so dass eine in Bezug auf diese Faktoren anpassbare Nachschaltzeit vorteilhaft ist.

Demnach geht die Erfindung aus von einem Verfahren zur Steuerung eines fluidbetätigten Steuersystems mit zumindest einer Druckquelle bzw. Druckmittelquelle und zumindest einem mit unter Druck stehendem Fluid beaufschlagbaren Stellglied sowie einer Einrichtung zur Steuerung des fluidbetätigten Steuersystems.

Unter einem fluidbetätigten Steuersystem wird dabei ein hydraulisches oder pneumatisches System verstanden, welches mit Hilfe von z.B. durch eine Steuereinrichtung elektrisch ansteuerbaren Ventilen gezielt Stellglieder, wie etwa Kolben-Zylinder-Anordnungen, betätigt bzw. deren bewegliches Teil in eine gewünschte Ziel- oder Siellposition bringt und so beispielsweise ein automatisiertes Schaltgetriebe eines Kraftfahrzeugs hinsichtlich seiner Übersetzung steuern kann.

Zur Lösung der verfahrensbezogenen Aufgabe ist vorgesehen, dass eine Nachschaltzeit-Steuerungseinrichtung zumindest die zeitliche Länge einer Nachschaltzeit des wenigstens einen Stellgliedes steuert und/oder regelt, und die Nachschaltzeit-Steuerungseinrichtung für die Ermittlung der Nachschaltzeit zumindest einen stellgliedspezifischen Parameter und/oder eine konkreten Einbaulage des Stellgliedes und/oder zumindest einen Betriebsparameter des fluidbetätigten Steuersystems und/oder des Fahrzeugs berücksichtigt.

Durch eine gezielt auf die jeweiligen Gegebenheiten angepasste Länge der Nachschaltzeit für jedes einzelne Stellglied kann die mechanische Belastung des oder der Stellglieder und weiterer Teile des Fluidmittelsystems, wie beispielsweise Pumpen, Leitungen und Ventile, verringert und beispielsweise auch eine Reduzierung oder Vermeidung von Eigenschwingungen erreicht werden, wenn entsprechende Parameter für die Festlegung der Nachschaltzeit berücksichtigt werden.

In der Ausführungsform der Erfindung ist vorgesehen, dass das fluidbetätigte Steuersystem eine Mehrzahl von mit unter Druck stehendem Fluid beaufschlagbaren Stellgliedern aufweist, und die Nachschaltzeit-Steuerungseinrichtung die zeitliche Länge einer Nachschaltzeit für verschiedene Stellglieder getrennt vorgibt.

Dies ermöglicht eine Einstellung bzw. Änderung der zeitlichen Länge der Nachschaltzeit eines, mehrerer oder auch aller Stellglieder des Fluidmittelsystems in Abhängigkeit von den genannten Parametern, und damit eine gezielte Optimierung der Nachschaltzeiten in Bezug auf den oder die jeweils verfolgten Ziele. Weiter wird so insbesondere eine Minimierung der Anzahl der zeitgleich zu betätigenden Ventile und somit auch eine Minimierung des mit der Ansteuerung der Ventile verbundenen Stromverbrauchs ermöglicht.

Dabei kann je nach Ausführungsform vorgesehen sein, dass bestimmte Stellglieder, deren Zielposition sich während eines aktuellen Schaltvorganges nicht verändert, nicht mit Druck beaufschlagt werden und dementsprechend deren Nachschaltzeit den Wert Null aufweist. Die diesen Stellgliedern zugeordneten Ventile brauchen demnach nicht angesteuert zu werden und verbrauchen folglich auch keine elektrische Energie.

Weiter kann durch eine Anpassung der Nachschaltzeiten unterschiedlicher Stellglieder auch eine zeitliche Staffelung der Bestromung unterschiedlicher Ventile erreicht und damit die benötigte Spitzenleistung im elektrischen Fahrzeugnetz gesenkt werden.

Wenn die Nachschaltzeit-Steuerungseinrichtung für die Ermittlung der Nachschaltzeit als stellgliedspezifischen Parameter eine Prellzeit berücksichtigt, also die Zeit, die nach einem Erreichen einer Zielposition eines beweglichen Teils wie z.B. eines Stellkolbens eines Stellgliedes verstreicht, bis dieses bewegliche Teil zur Ruhe gekommen ist, so kann einerseits die Nachschaltzeit kurz gehalten und andererseits sichergestellt werden, dass z.B. der Stellkolben nicht durch ein Zurückprallen oder bei Fehlen eines Anschlags auch durch ein Weiterbewegen in einer unerwünschten Position zur Ruhe kommt.

Weiter können mit dem Prellen verbundene Schwingungen verringert oder verhindert werden, die insbesondere über das Fluid über weite Strecken überragen werden und bei Überlagerung mehrerer Schwingungen oder bei Auftreten einer Resonanzfrequenz zu schwerwiegenden Schädigungen des Fluidmittelsystems, zu Fehlfunktionen, zumindest aber zu als unangenehm empfundenen Geräuschen führen können.

Dabei kann die Prellzeit selbst mittels unterschiedlicher Parameter abgeschätzt, gemessen, berechnet oder aus abgespeicherten Tabellen ausgelesen werden. Insbesondere kann die Preilzeit dabei in Abhängigkeit vom Druck des Druckmittels oder Differenzdruck im Stellglied und je nach Bauart des Stellgliedes differieren. Auch eine Berücksichtigung der Temperatur des Druckmittels bzw. des Stellgliedes und der Bewegungsgeschwindigkeit sowie der Bewegungsrichtung des beweglichen Teils des Stellgliedes kann hier sinnvoll sein.

Weiter optimieren lässt sich das erfindungsgemäße Verfahren, wenn die Nachschaltzeit-Steuerungseinrichtung für die Ermittlung der Nachschaltzeit eine aus Eigenschaften der Fluidleitung zu dem Stellglied resultierende Nachschwingzeit berücksichtigt. Beispielsweise können hier Leitungsquerschnitte, Leitungslängen, Leitungswiderstände und Resonanzfrequenzen der Fluidleitungen berücksichtigt werden, um z.B. unterschiedliche, fluidleitungsbedingte Totzeiten oder Resonanzfrequenzen der Fluidleitungen bei der Ansteuerung der Stellglieder mit zu erfassen.

Eine andere Ausprägung des Verfahrens sieht vor, dass die Nachschaltzeit-Steuerungseinrichtung für die Ermittlung der Nachschaltzeit als Betriebsparameter des fluidbetätigten Steuersystems einen aktuell vorliegenden oder für die nahe Zukunft erwarteten, für die Ansteuerung des oder der Stellglieder verfügbaren Fluiddruck berücksichtigt.

Dies ermöglicht nicht nur eine vorstehend bereits erwähnte verbesserte Abschätzung der Prellzeit, sondern vor allem eine Reaktion auf z.B. einen durch weitere Nebenaggregate oder einen Defekt im Pumpensystem verringerten zur Verfügung stehenden Fluiddruck, und verbessert damit die Notbetriebseigenschaften und Systemkompatibilität, Weiter ist es beispielsweise bei einer vorzubereitenden Schaltsequenz oder anderen vorhersehbaren oder erwartbaren Fluidsystemzuständen mit sich veränderndem Fluiddruck sinnvoll, dieses bereits vor dem Erreichen des prognostizierten Druckwertes zu berücksichtigen und z.B. notwendige Schaltvorgänge mit einem möglichst geringen Einfluss auf das Druckniveau durchzuführen, welches zumeist eine Verkürzung der Nachschaltzeiten bedeutet.

Wenn gemäß einer anderen Variante die Nachschaltzeit-Steuerungseinrichtung für die Ermittlung der Nachschaltzeit als Betriebsparameter des fluidbetätigten Steuersystems einen aktuell vorliegenden oder für die nahe Zukunft erwarteten, für die Ansteuerung des oder der Stellglieder verfügbaren Volumenstrom des Fluids berücksichtigt, können ähnliche positive Effekte erzielt werden, die jedoch auf eine Optimierung des zur Verfügung stehenden Volumenstroms abzielen.

Daneben ist es sinnvoll, wenn eine Nachschaltzeit-Steuerungseinrichtung zur Ermittlung der Nachschaltzeit als Betriebsparameter des fluidbetätigten Steuersystems berücksichtigt, ob ein Stellglied in eine andere Stellposition gebracht wurde, oder, soweit die Nachschaltzeit-Steuerungseinrichtung die Ermittlung der Nachschaltzeit bereits vor der Ansteuerung von Stellgliedern ermittelt, in eine andere Stellposition gebracht werden soll.

Dies ist insbesondere bei pneumatischen Systemen eine sinnvolle Möglichkeit zur Verringerung des benötigten Volumenstroms sowie zur Reduzierung des Druckabfalls im Fluidmittelsystem, und kann darüber hinaus auch die Lebensdauer der Ventile und Stellglieder durch eine seltenere Ansteuerung bzw. das Vermeiden von nicht zwingend benötigten Druckstößen deutlich verlängern.

Außerdem kann die Nachschaltzeit-Steuerungseinrichtung zur Ermittlung der Nachschaltzeit als Betriebsparameter des fluidbetätigten Steuersystems die Verstellrichtung des Stellgliedes berücksichtigen.

Dies bietet sich vor allem bei Stellgliedern mit asymmetrischem Aufbau an, bei denen beispielsweise die Prelizeit bei Erreichen entgegengesetzter Anschläge stark unterschiedlich ist. Eine Berücksichtigung kann jedoch auch bei unterschiedlichen Belastungen sinnvoll sein, wie sie zum Beispiel bei Stellbewegungen mit und gegen die Schwerkraft oder eine Federkraft auftreten können. Schließlich können auch bei Stellelementen mit ansonsten gleichen Prellzeiten unterschiedliche Druckmittelzu- und Ableitungen oder unterschiedliche Ventile eine Variierung der Nachschaltzeit in Abhängigkeit von der Stellrichtung sinnvoll erscheinen lassen.

Eine weitere Variante des Verfahrens sieht vor, dass die NachschaltzeitSteuerungseinrichtung für die Ermittlung der Nachschaltzeit als Betriebsparameter des fluidbetätigten Steuersystems die Art der Schaltanforderung an das Stellglied berücksichtigt. Unterschiedliche Schaltanforderungen können dabei insbesondere beim Einschalten im Gegensatz zum Ausschalten eines Systems vorliegen, aber auch bei einem Notbetrieb im Gegensatz zu einem Normalbetrieb oder in einem sportlich-optimierten Schaltmodus im Vergleich zu einem komfortoptimierten Schaltmodus auftreten. Die Nachschaltzeiten können mit Hilfe des erfindungsgemäßen Verfahrens für die besonderen Anforderungen der jeweiligen Schaltanforderungen optimiert werden.

Ähnliche positive Effekte können jedoch auch durch eine entsprechende Berücksichtigung der Schaltphase des fluidbetätigten Steuersystems erzielt werden, wobei unter der Schaltphase beispielsweise ein Teilschaltprozess eines mehrstufigen Schaltprozesses verstanden werden kann. So kann es sinnvoll sein, für das Einlegen eines Zielganges eines Getriebes andere Werte vorzusehen, als für das Auslegen des zuvor eingelegten Ganges.

In jedem Fall ist es jedoch sinnvoll, wenn die Nachschaltzeit-Steuerungseinrichtung für die Ermittlung der Nachschaltzeit als Betriebsparameter des fluidbetätigten Steuersystems den Zeitpunkt des Erreichens einer Zielposition des Stellgliedes berücksichtigt, sofern diese z.B. über ohnehin vorhandene Sensoren bekannt ist oder mit vertretbarem Aufwand ermittelt werden kann.

Es ist zwar grundsätzlich möglich und auch praktikabel, die Nachschaltzeit mit Hilfe einer unter den gegebenen Betriebsbedingungen des Systems erwartbaren Bewegungszeit eines Stellgliedes festzulegen, indem diese Bewegungszeit mit der Nachschaltzeit und gegebenenfalls Totzeiten zu einer Gesamt-Ansteuerungszeit für zum Beispiel anzusteuernde Ventile aufaddiert wird. Die Genauigkeit der Nachschaltzeit steigt jedoch beträchtlich, wenn sich Schwankungen der tatsächlich durch das Stellglied benötigten Bewegungszeit nicht auf die Nachschaltzeit auswirken.

Die Berücksichtigung des Erreichens der Zielposition durch ein Stellglied ist dabei besonders einfach zu implementieren, wenn die Nachschaltzeit-Steuerungseinrichtung für die Ermittlung der Nachschaltzeit als Betriebsparameter des fluidbetätigten Steuersystems ein Positionssignal des Stellgliedes berücksichtigt, das im einfachsten Fall einer gewünschten Stellung, z.B. einer Endlage des Stellgliedes entspricht.

Auch darüber hinaus ist ein derartiges Positionssignal nützlich, da es eine Kontrolle der tatsächlich eingenommenen Position des Stellgliedes ermöglicht und so einerseits eine Warnung oder die Einleitung von anderen Maßnahmen im Falle einer Fehlfunktion gestattet, andererseits beispielsweise bei temperatur- oder alterungsbedingten Positionsveränderungen unter ansonsten gleichen Randbedingungen auch diese Effekte mit geringem zusätzlichem Aufwand berücksichtigt werden können. Nicht zuletzt ermöglicht ein Positionssignal des Stellglieds eine direkte Ermittlung von mechanischen Schwingungen und eine Steuerung der Nachschaltzeit auf Werte, bei denen eine unzulässig oder unerwünscht starke Schwingung unterschritten wird.

Ein weiterer grundlegender Aspekt des Verfahrens sieht vor, dass die Nachschaltzeit-Steuerungseinrichtung für die Ermittlung der Nachschaltzeit als Betriebsparameter einen Betriebszustand des Fahrzeugs berücksichtigt.

Der Begriff des Betriebszustandes des Fahrzeugs in Abgrenzung von Betriebszuständen des fluidbetätigten Steuersystems wird dabei weit gefasst und schließt beispielsweise auch Zustände der Umgebung des Fahrzeugs oder des Fahrers mit ein, die direkten Einfluss auf das gewünschte Verhalten des Fahrzeugs und des fluidbetätigten Steuersystems haben.

Als Betriebszustand des Fahrzeugs kommen dabei beispielsweise die Straßenverhältnisse in Betracht, da es z.B. bei glatten Straßen angezeigt sein kann, die Nachschaltzeiten zur verlängern, um bei Schaltvorgängen ein insgesamt ruhigeres Fahrverhalten zu erzeugen.

Daneben oder zusätzlich ist es möglich, dass ein Fahrer den Betriebszustand des Fahrzeugs manuell festlegt, indem er etwa den Betriebszustand "sportliches Schalten" oder den Betriebszustand "komfortbetontes Fahren" zum Beispiel mittels eines Wahlschalters oder auch mittels einer änderbaren Kodierung seines Fahrzeugschlüssels vorgibt.

Im ersten Fall können die Nachschaltzeiten beispielsweise gegenüber einem Normalfahrmodell deutlich verkürzt werden, welches zwar unter Umständen eine durch stärkere Schwingungen verursachte, leicht erhöhte Schallemission des Systems bedingt, jedoch auch ein schnelleres Schalten eines Getriebes ermöglicht. Im zweiten Fall kann dagegen die Nachschaltzeit in Hinblick auf Geräuschemissionen und Vibrationen optimiert und dabei bewusst eine etwas längere Schaltzeit in Kauf genommen werden.

Eine letzte Ausbildung des Verfahrens sieht vor, dass eine Steuerungseinrichtung des Fahrzeugs den Betriebszustand des Fahrzeugs auf der Grundlage von vergangenheitsbezogenen Fahrdaten automatisch ermittelt und so, gegebenenfalls getrennt für unterschiedliche, beispielsweise über jeweilige Schlüsselcodes unterscheidbare Nutzer, das Verhalten des Fluidmittelsystems bzw. der Getriebeschaltung automatisch dem Fahrstil des Nutzers anpasst. Hierfür können beispielsweise Betätigungsfrequenzen und Auslenkungen des Fahrpedals, des Bremspedals und der Lenkung ausgewertet werden.

Nachfolgend wird kurz auf eine Vorrichtung eingegangen, die zur Durchführung des erfindungsgemäßen Verfahrens geeignet ist.

Ein fluidbetätigtes Steuersystem zur Durchführung des Verfahrens nach wenigstens einem der vorherigen Merkmale weist zumindest eine Druckmittelquelle zum Beaufschlagen eines hydraulischen oder pneumatischen Arbeitsfluids mit einem erhöhten Druck, zumindest ein mit Hilfe des unter erhöhtem Druck stehenden Arbeitsfluids ansteuerbares Stellglied sowie eine Steuereinrichtung zur Ansteuerung von Ventilen zur Steuerung und/oder Regelung des Druckes in verschiedenen Teilen des fluidbetätigten Steuersystems auf.

In soweit entspricht dieses fluidbetätigte Steuersystem bis zu diesem Punkt einem herkömmlichen hydraulischen oder pneumatischen Steuerungssystem, und insbesondere einem hydraulischen oder pneumatischen System zur automatischen Ansteuerung eines automatischen oder automatisierten Getriebes für ein Kraftfahrzeug.

Zusätzlich ist jedoch eine Nachschaltzeit-Steuerungseinrichtung vorgesehen, die zumindest eine Nachschaltzeit eines Stellgliedes in Abhängigkeit von zumindest einem stellgliedspezifischen Parameter und/oder einer Einbaulage des Stellgliedes und/oder zumindest einen Betriebsparameter des fluidbetätigten Steuersystems und/oder des Fahrzeugs steuern und/oder regeln kann.

Diese Nachschaltzeit-Steuerungseinrichtung kann selbstverständlich in eine herkömmliche Steuerungsvorrichtung integriert sein, aber auch ein eigenständiges Modul bilden, welches die Signale einer herkömmlichen Steuerungsvorrichtung entsprechend anpasst. Die Nachschaltzeit-Steuerungsvorrichtung verfügt über die üblichen und jeweils notwendigen Ein- und Ausgänge, etwa für zu verarbeitende Sensor- oder Gebersignale, Energieversorgung und Ausgangssignale.

Letztere können sowohl als parallele Signale ausgegeben werden, die gegebenenfalls nach einer elektrischen Verstärkung unmittelbar zur Ansteuerung von Ventilen dienen, sie können aber auch z.B. in Form eines Bus-Signals nach einem beliebigen Protokoll vorliegen und beispielsweise in einem weiteren Modul gegebenenfalls mit Signalen einer herkömmlichen Steuereinrichtung verknüpft und/oder in Einzelsignale für unterschiedliche Ventile getrennt und wenn notwendig verstärkt werden.

Es ist dabei unerheblich, ob die Nachschaltzeit-Steuerungseinrichtung Signale zur Ansteuerung von Ventilen bzw. Stellgliedern von einer herkömmlichen Steuerungseinrichtung einliegt und diese zur Berücksichtigung der gewünschen bzw. ermittelten Nachschaltzeiten weiterverarbeitet, oder die Nachschaltzeit-Steuerungseinrichtung einer herkömmlichen Steuerungsvorrichtung Korrektursignale zur Berücksichtigung der gewünschten bzw. ermittelten Nachschaltzeiten übermittelt.

Die Erfindung lässt sich anhand eines Ausführungsbeispiels weiter erläutern. Dazu ist der Beschreibung eine Zeichnung beigefügt.

In dieser Zeichnung ist ein erfingdungsgemäß ausgebildetes fluidbetätigtes Steuersystem dargestellt, welches aus einer hier als hydraulische Druckmittelpumpe ausgebildeten Druckmittelquelle 1, zwei Stellgliedern 2 und 3 in Form von Kolben-Zylinder-Anordnungen sowie aus jeweils die Druckzuleitung bzw. Druckableitung von beziehungsweise zu der Druckmittelquelle 1 kontrollierenden Ventilen V1 bis V8 besteht, die durch eine Nachschaitzeit-Steuerungseinrichtung 4 angesteuert werden. Das fluidbetätigte Steuersystem kann aber genauso gut auch pneumatisch betrieben werden.

Die Nachschaltzeit-Steuerungseinrichtung 4 erhält grundlegende Steuerdaten ohne Berücksichtigung von Nachschaltzeiten bzw. mit einer nur pauschalen Berücksichtigung von Nachschaitzeiten gemäß dem Stand der Technik von einer herkömmlichen Steuerungsvorrichtung 5 und weist daneben noch Eingänge 6 für weitere Signale auf. Die Nachschaltzeit-Steuerungseinrichtung 4 bildet daraus Gesamtsteuerzeiten für die Ventile V1 bis V8 unter Einbeziehung der selbst ermittelten Nachschaltzeit.

Das erste Stellglied 2 und das zweite Stellglied 3 weisen jeweils einen in diesem Ausführungsbeispiel hydraulisch verstellbaren Kolben 7 bzw. 8 auf, die im Betrieb jeweils bis an einen der Anschläge A1 oder A2 beziehungsweise A3 oder A4 bewegt werden sollen, und dabei über die Kolbenstangen 9 und 10 sowie Umlenkeinrichtungen 11 und 12 und diesbezügliche Schalt- und Wählmittel die Übersetzung zwischen einer Eingangswelle 13 und Abtriebswelle 14 eines automatisierten Schaltgetriebes 15 einstellen.

Erfindungswesentlich ist dabei, dass die Nachschaltzeit-Steuerungseinrichtung 4 die Nachschaltzeit für die Ventile V1 bis V8 gemäß einer oder mehrerer der vorstehend bereits ausführlich beschriebenen Ausführungsvarianten bestimmt und mit Hilfe der von der herkömmlichen Steuerungsvorrichtung 5 übermittelten Ansteuerungsdaten für die Ventile V1 bis V8 Gesamtansteuerungszeiten für diese Ventile V1 bis V8 bildet sowie diesbezügliche Steuersignale gegebenenfalls nach einer entsprechenden Verstärkung an die einzelnen Ventile V1 bis V8 ausgibt.

Selbstverständlich ist es auch möglich, dass die herkömmliche Steuerungsvorrichtung 5 Ansteuerungssignale an die Ventile V1 bis V8 ausgibt und zur Bildung von Gesamtansteuerungszeiten von der Nachschaltzeit-Steuerungseinrichtung 4 die Nachschaltzeiten oder diesbezügliche Korrekturwerte übermittelt bekommt.

### Bezugszeichen

- 1: Druckmittelquelle
- 2: erstes Stellglied
- 3: zweites Stellglied
- 4: Nachschaitzeit-Steuerungsefnrichtung
- 5: herkömmliche Steuerungsvorrichtung
- 6: weitere Signale
- 7: verstellbarer Kolben des ersten Stellgliedes
- 8: verstellbarer Kolben des zweiten Stellgliedes
- 9: Kolbenstange des ersten Stellgliedes
- 10: Kolbenstange des zweiten Stellgliedes
- 11: Umlenkeinrichtung der Kolbenstange des ersten Stellgliedes
- 12: Umlenkeinrichtung der Kolbenstange des zweiten Stellgliedes
- 13: Eingangswelle des automatisierten Getriebes
- 14: Abtriebswelle des automatisierten Getriebes
- 15: automatisiertes Getriebe

- V1-V8: Ventile
- A1-A4: Anschläge der verstellbaren Kolben der Stellglieder

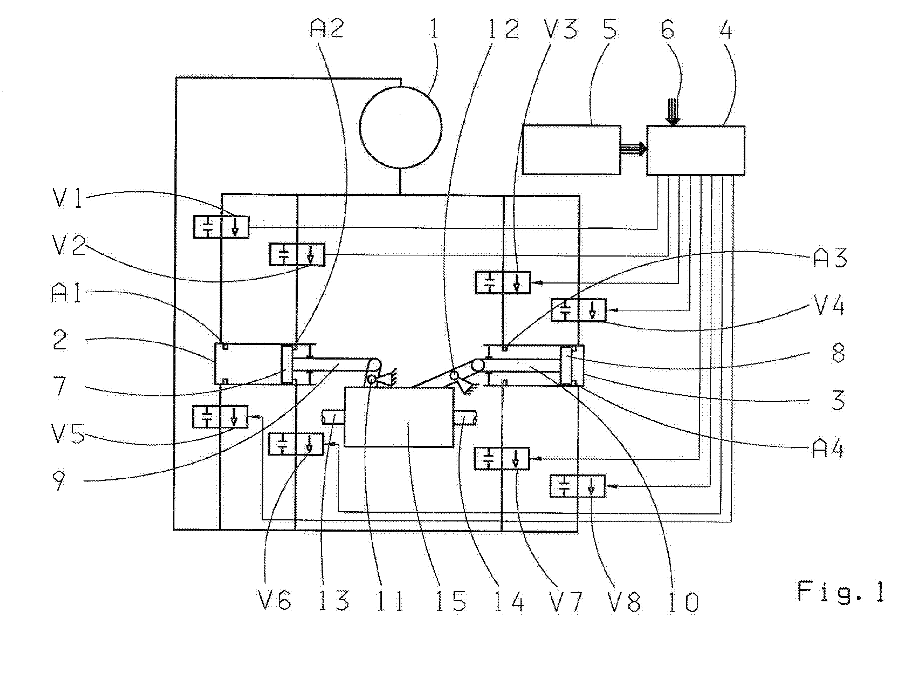

## Patentansprüche

1. Verfahren zur Steuerung eines fluidbetätigten Steuersystems mit zumindest einer Druckmittelquelle (1) und zumindest einem mit unter Druck stehendem Fluid beaufschlagbaren Stellglied (2, 3) sowie mit einer Steuereinrichtung (5) zur Steuerung des fluidbetätigten Steuersystems, wobei eine Nachschaltzeit-Steue-rungseinrichtung (4) zumindest die zeitliche Länge einer Nachschaltzeit des wenigstens einen Stellgliedes (2, 3) steuert und/oder regelt, **dadurch gekennzeichnet, dass** die Nachschaltzeit-Steuerungsein-richtung (4) für die Ermittlung der Nachschaltzeit zumindest einen stellgliedspezifischen Parameter und/oder eine konkreten Einbaulage des Stellgliedes (2, 3) und/oder zumindest einen Betriebsparameter des fluidbetätigten Steuersystems und/oder des Fahrzeugs berücksichtigt, wobei das fluidbetätigte Steuersystem eine Mehrzahl von mit unter Druck stehendem Fluid beaufschlagbare Stellglieder (2, 3) aufweist und die Nachschaltzeit-Steuerungseinrichtung (4) die zeitliche Länge einer Nachschaltzeit für verschiedene Stellglieder (2, 3) getrennt vorgibt.

2. Verfahren nach Anspruch 1, **dadurch gekennzeichnet, dass** die Nachschaltzeit-Steuerungseinrichtung (4) für die Ermittlung der Nachschaltzeit als stellgliedspezifischen Parameter eine Prellzeit berücksichtigt.

3. Verfahren nach Anspruch 1 oder 2, **dadurch gekennzeichnet, dass** die Nachschaltzeit-Steuerungseinrichtung (4) für die Ermittlung der Nachschaltzeit eine aus Eigenschaften der Fluidleitung zu dem Stellglied resultierende Nachschwingzeit berücksichtigt.

4. Verfahren nach wenigstens einem der vorherigen Ansprüche,
**dadurch gekennzeichnet, dass** die Nachschaltzeit-Steuerungseinrichtung (4) für die Ermittlung der Nachschaltzeit als Betriebsparameter des fluidbetätigten Steuersystems einen aktuell vorliegenden oder für die nahe Zukunft erwarteten, für die Ansteuerung des oder der Stellglieder (2, 3) verfügbaren Fluiddruck berücksichtigt.

5. Verfahren nach wenigstens einem der vorherigen Ansprüche,
**dadurch gekennzeichnet, dass** die Nachschaltzeit-Steuerungseinrichtung (4) für die Ermittlung der Nachschaltzeit als Betriebsparameter des fluidbetätigten Steuersystems einen aktuell vorliegenden oder für die nahe Zukunft erwarteten, für die Ansteuerung des oder der Stellglieder (2, 3) verfügbaren Volumenstrom des Fluids berücksichtigt.

6. Verfahren nach wenigstens einem der vorherigen Ansprüche,
**dadurch gekennzeichnet, dass** die Nachschaltzeit-Steuerungseinrichtung (4) für die Ermittlung der Nachschaltzeit als Betriebsparameter des fluidbetätigten Steuersystems berücksichtigt, ob das Stellglied (2, 3) in eine andere Stellposition gebracht wurde oder gebracht werden soll.

7. Verfahren nach wenigstens einem der vorherigen Ansprüche,
**dadurch gekennzeichnet, dass** die Nachschaltzeit-Steuerungseinrichtung (4) für die Ermittlung der Nachschaltzeit als Betriebsparameter des fluidbetätigten Steuersystems die Verstellrichtung des Stellgliedes (2, 3) berücksichtigt.

8. Verfahren nach wenigstens einem der vorherigen Ansprüche,
**dadurch gekennzeichnet, dass** die Nachschaltzeit-Steuerungseinrichtung (4) für die Ermittlung der Nachschaltzeit als Betriebsparameter des fluidbetätigten Steuersystems die Art der Schaltanforderung an das Stellglied (2, 3) berücksichtigt.

9. Verfahren nach wenigstens einem der vorherigen Ansprüche,
**dadurch gekennzeichnet, dass** die Nachschaltzeit-Steuerungseinrichtung (4) für die Ermittlung der Nachschaltzeit als Betriebsparameter des fluidbetätigten Steuersystems die Schaltphase des fluidbetätigten Steuersystems berücksichtigt.

10. Verfahren nach wenigstens einem der vorherigen Ansprüche,
**dadurch gekennzeichnet, dass** die Nachschaltzeit-Steuerungseinrichtung (4) für die Ermittlung der Nachschaltzeit als Betriebsparameter des fluidbetätigten Steuersystems den Zeitpunkt des Erreichens einer Zielposition des Stellgliedes (2, 3) berücksichtigt.

11. Verfahren nach wenigstens einem der vorherigen Ansprüche,
**dadurch gekennzeichnet, dass** die Nachschaltzeit-Steuerungseinrichtung (4) für die Ermittlung der Nachschaltzeit als Betriebsparameter des fluidbetätigten Steuersystems ein Positionssignal des Stellgliedes (2, 3) berücksichtigt.

12. Verfahren nach wenigstens einem der vorherigen Ansprüche,
**dadurch gekennzeichnet, dass** die Nachschaltzeit-Steuerungseinrichtung (4) für die Ermittlung der Nachschaltzeit als Betriebsparameter einen Betriebszustand des Fahrzeugs berücksichtigt.

13. Verfahren nach Anspruch 12, **dadurch gekennzeichnet, dass** ein Fahrer den Betriebszustand des Fahrzeugs manuell festlegt.

14. Verfahren nach Anspruch 13, **dadurch gekennzeichnet, dass** eine Steuerungseinrichtung des Fahrzeugs den Betriebszustand des Fahrzeugs auf der Grundlage von vergangenheitsbezogenen Fahrdaten automatisch ermittelt.

## Claims

1. Method for controlling a fluid-actuated control system having at least one pressure medium source (1) and at least one actuating element (2, 3) to which pressurized fluid can be applied, and having a control unit (5) for controlling the fluid-actuated control system, wherein a post-switching time control device (4) performs open-loop and/or closed-loop control of at least the chronological length of a post-switching time of the at least one actuating element (2, 3), **characterized in that** the post-switching time control device (4) takes into account, for the determination of the post-switching time, at least one actuating-element-specific parameter and/or a specific installation position of the actuating element (2, 3) and/or at least one operating parameter of the fluid-actuated control system and/or of the vehicle, wherein the fluid-actuated control system has a multiplicity of actuating elements (2, 3) to which pressurized fluid can be applied, and the post-switching time control device (4) predefines the chronological length of a post-switching time separately for various actuating elements (2, 3).

2. Method according to Claim 1, **characterized in that** for the determination of the post-switching time the post-switching time control device (4) takes into account a bounce time as an actuating-element-specific parameter.

3. Method according to Claim 1 or 2, **characterized in that** for the determination of the post-switching time the post-switching time control device (4) takes into account a reverberation time resulting from properties of the fluid line leading to the actuating element.

4. Method according to at least one of the preceding claims, **characterized in that** for the determination of the post-switching time the post-switching time control device (4) takes into account, as an operating parameter of the fluid-actuated control system, a fluid pressure which is currently present or is expected for the near future and is available for actuating the actuating element or elements (2, 3).

5. Method according to at least one of the preceding claims, **characterized in that** for the determination of the post-switching time the post-switching time control device (4) takes into account, as an operating parameter of the fluid-actuated control system, a volume flow of the fluid which is currently present or is expected for the near future and is available for actuating the actuating element or elements (2, 3).

6. Method according to at least one of the preceding claims, **characterized in that** for the determination of the post-switching time the post-switching time control device (4) takes into account, as an operating parameter of the fluid-actuated control system, whether the actuating element (2, 3) has been or is to be moved into another actuating position.

7. Method according to at least one of the preceding claims, **characterized in that** for the determination of the post-switching time the post-switching time control device (4) takes into account the adjustment direction of the actuating element (2, 3) as an operating parameter of the fluid-actuated control system.

8. Method according to at least one of the preceding claims, **characterized in that** for the determination of the post-switching time the post-switching time control device (4) takes into account the type of switching request to the actuating element (2, 3) as an operating parameter of the fluid-actuated control system.

9. Method according to at least one of the preceding claims, **characterized in that** for the determination of the post-switching time the post-switching time control device (4) takes into account the switching phase of the fluid-actuated control system as an operating parameter of the fluid-actuated control system.

10. Method according to at least one of the preceding claims, **characterized in that** for the determination of the post-switching time the post-switching time control device (4) takes into account the time when a target position of the actuating element (2, 3) is reached as an operating parameter of the fluid-actuated control system.

11. Method according to at least one of the preceding claims, **characterized in that** for the determination of the post-switching time the post-switching time control device (4) takes into account a position signal of the actuating element (2, 3) as an operating parameter of the fluid-actuated control system.

12. Method according to at least one of the preceding claims, **characterized in that** for the determination of the post-switching time the post-switching time control device (4) takes into account an operating state of the vehicle as an operating parameter.

13. Method according to Claim 12, **characterized in that** a driver defines the operating state of the vehicle manually.

14. Method according to Claim 13, **characterized in that** a control device of the vehicle determines the operating state of the vehicle automatically on the basis of driving data relating to the past.

## Revendications

1. Procédé de commande d'un système de commande actionné par fluide et présentant
au moins une source (1) de fluide sous pression et au moins un organe de réglage (2, 3) sur lequel un fluide placé sous pression peut être appliqué et
un dispositif de commande (5) qui commande le système de commande actionné par fluide,
un dispositif (4) de commande de la durée de branchement commandant et/ou régulant la longueur d'une durée de branchement du ou des organes de réglage (2, 3),
**caractérisé en ce que**
pour la détermination de la durée de branchement, le dispositif (4) de commande de la durée de branchement tient compte au moins d'un paramètre spécifique à l'organe de commande, de la position de montage concrète de l'organe de commande (2, 3), d'au moins un paramètre de fonctionnement du système de commande actionné par fluide et/ou du véhicule,
**en ce que** le système de commande actionné par fluide présente plusieurs organes de réglage (2, 3) sur lequel un fluide placé sous pression peut être appliqué et
**en ce que** le dispositif (4) de commande de la durée de branchement définit séparément la longueur de la durée de branchement des différents organes de réglage (2, 3).

2. Procédé selon la revendication 1, **caractérisé en ce que** comme paramètre spécifique à l'organe de réglage, le dispositif (4) de commande de la durée de branchement tient compte d'une durée de débattement pour la détermination de la durée de branchement.

3. Procédé selon les revendications 1 ou 2, **caractérisé en ce que** pour la détermination de la durée de branchement, le dispositif (4) de commande de la durée de branchement tient compte d'une durée d'oscillation rémanente qui résulte des propriétés de l'amenée de fluide à l'organe de commande.

4. Procédé selon au moins l'une des revendications précédentes, **caractérisé en ce que** pour la détermination de la durée de branchement et comme paramètres de fonctionnement du système de commande actionné par fluide, le dispositif (4) de commande de la durée de branchement tient compte de la pression en cours du fluide ou de la pression du fluide attendue dans le futur proche comme disponible pour la commande du ou des organes de réglage (2, 3).

5. Procédé selon au moins l'une des revendications précédentes, **caractérisé en ce que** pour la détermination de la durée de branchement et comme paramètre de fonctionnement du système de commande actionné par fluide le dispositif (4) de commande de la durée de branchement tient compte du débit volumique de fluide en cours ou attendu dans le futur proche comme disponible pour la commande du ou des organes de réglage (2, 3).

6. Procédé selon au moins l'une des revendications précédentes, **caractérisé en ce que** pour la détermination de la durée de branchement et comme paramètre de fonctionnement du système de commande actionné par fluide le dispositif (4) de commande de la durée de branchement tient compte du fait que l'organe de commande (2, 3) a été ou doit être amené dans une autre position de réglage.

7. Procédé selon au moins l'une des revendications précédentes, **caractérisé en ce que** pour la détermination de la durée de branchement et comme paramètre de fonctionnement du système de commande actionné par fluide le dispositif (4) de commande de la durée de branchement tient compte de la direction de déplacement de l'organe de réglage (2, 3).

8. Procédé selon au moins l'une des revendications précédentes, **caractérisé en ce que** pour la détermination de la durée de branchement et comme paramètre de fonctionnement du système de commande actionné par fluide le dispositif (4) de commande de la durée de branchement tient compte de la nature de la demande de commutation faite à l'organe de commande (2, 3) .

9. Procédé selon au moins l'une des revendications précédentes, **caractérisé en ce que** pour la détermination de la durée de branchement et comme paramètre de fonctionnement du système de commande actionné par fluide le dispositif (4) de commande de la durée de branchement tient compte de la phase de commutation du système de commande actionné par fluide.

10. Procédé selon au moins l'une des revendications précédentes, **caractérisé en ce que** pour la détermination de la durée de branchement et comme paramètre de fonctionnement du système de commande actionné par fluide le dispositif (4) de commande de la durée de branchement tient compte de l'instant où l'organe de réglage (2, 3) atteint une position cible.

11. Procédé selon au moins l'une des revendications précédentes, **caractérisé en ce que** pour la détermination de la durée de branchement et comme paramètre de fonctionnement du système de commande actionné par fluide le dispositif (4) de commande de la durée de branchement tient compte d'un signal de position de l'organe de commande (2, 3).

12. Procédé selon au moins l'une des revendications précédentes, **caractérisé en ce que** pour la détermination de la durée de branchement et comme paramètre de fonctionnement du système de commande actionné par fluide le dispositif (4) de commande de la durée de branchement tient compte de l'état de fonctionnement du véhicule.

13. Procédé selon la revendication 12, **caractérisé en ce que** le conducteur détermine manuellement l'état de fonctionnement du véhicule.

14. Procédé selon la revendication 13, un dispositif de commande du véhicule détermine automatiquement l'état de fonctionnement du véhicule sur la base de données de conduite rapportées au passé.
